# EUROPÄISCHE PATENTANMELDUNG

(11) **EP 1 582 128 A1**
(43) Veröffentlichungstag der Anmeldung: **05.10.2005**
(21) Anmeldenummer: 05004418.9
(22) Anmeldetag: 01.03.2005
(51) Int. Cl.: A47J 37/10

(54) **Grillpfanne**

(30) Priorität: 28.03.2004 DE 102004015511
(71) Anmelder: QVC Handel GmbH, 40221 Düsseldorf (DE)
(72) Erfinder: Dierkes, Lothar, 40670 Meerbusch (DE)
(74) Vertreter: LENZING GERBER

(57) **Zusammenfassung**

Es wird eine Küchenpfanne geschaffen, insbesondere eine Grillpfanne, mit einem Pfannenboden, der eine Ofenseite und eine Gargutseite aufweist, mit einer umlaufenden, an einem äußeren Rand des Pfannenbodens angeordneten Seitenwand mit einem oberen Rand, mit wenigstens einem Handgriff sowie mit der Gargutseite zugeordneten Rippen und zwischen den Rippen ausgebildeten Rillen, bei der die Gargutseite mit der Ofenseite einen spitzen Winkel einschließt.

## Beschreibung

Die vorliegende Erfindung betrifft eine Pfanne für die Lebensmittelzubereitung mit den Merkmalen des Anspruchs 1.

Aus der US-PS 5,967,024 ist eine Pfanne bekannt, bei der die Gargutseite des Pfannenbodens im wesentlichen glatt ist und eine spiralförmig ausgebildete Rille aufweist, die in einem randseitig des Pfannenbodens ausgebildeten Reservoir münden. Dadurch soll das während des Garprozesses frei werdende Fett und der Fleischsaft in das Reservoir abgeleitet werden. Das Gargut selbst soll dadurch von Fett frei gehalten werden. Die ist in der Praxis nur eingeschränkt der Fall.

Weiter sind sogenannte Grillpfannen bekannt, die Rippen auf der Gargutseite aufweisen. Das Gargut liegt auf den Rippen auf. Das Fett und der Fleischsaft sammelt sich in den dazwischen liegenden Rillen. Die Flüssigkeit steht dabei teilweise unter dem Gargut und beeinträchtigt beispielsweise durch Dampfentwicklung die Qualität des Gargutes. Die Flüssigkeit lässt sich nicht vorteilhaft abgießen.

Es ist deshalb Aufgabe der vorliegenden Erfindung, eine Küchenpfanne zu schaffen, bei der die Abfuhr der entstehenden Flüssigkeit besser gewährleistet ist.

Diese Aufgabe wird von einer Pfanne mit den Merkmalen des Anspruchs 1 gelöst.

Vorteilhafte Ausgestaltungen ergeben sich aus den Merkmalen der abhängigen Patentansprüche.

Nachfolgend wird ein Ausführungsbeispiel der vorliegenden Erfindung anhand der Zeichnung beschrieben. Es zeigen:
- Fig. 1:: eine erfindungsgemäße Küchenpfanne in einer Drauf sicht;
- Fig. 2:: die Pfanne aus Fig.1 mit in einem Querschnitt quer zu der Rillenstruktur; sowie
- Fig. 3:: die Pfanne aus Fig. 1 in einem Querschnitt parallel zu der Rillenstruktur.

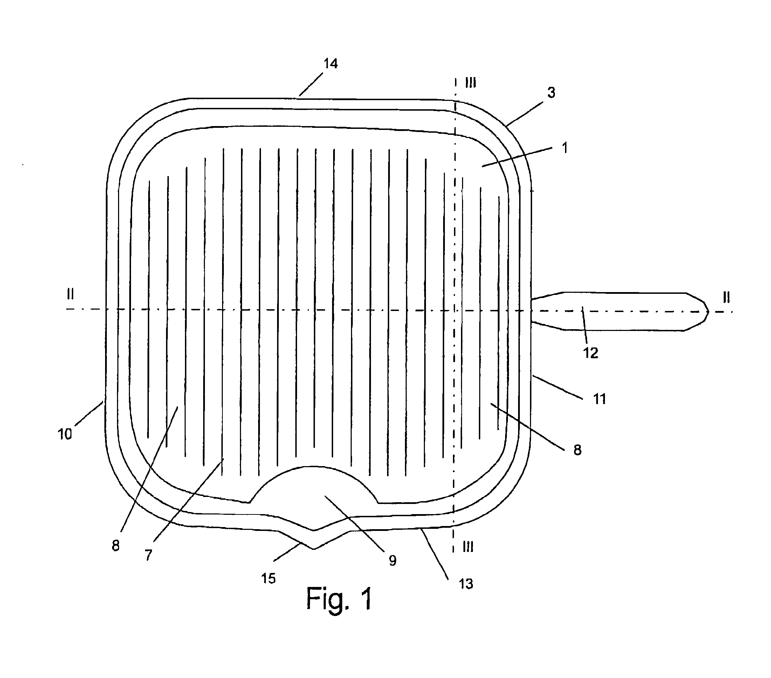

In der Figur 1 ist in einer Draufsicht eine erfindungsgemäße Grillpfanne dargestellt. Ein Pfannenboden 1 ist etwa quadratisch mit kissenförmig nach außen abgerundeten Rändern 2 ausgebildet. An den Rändern 2 trägt der Pfannenboden 1 eine umlaufende Seitenwand 3 mit einem oberen Rand 4. Der Pfannenboden 1 begrenzt mit der Seitenwand 3 einen nach oben offenen Garraum 5. Die dem Garraum zugewandte Oberfläche des Pfannenbodens 2 bildet eine Gargutseite 6, die eine Anzahl von Rippen 7 aufweist. Zwischen je zwei benachbarten Rippen 7 ergibt sich eine Rille 8. Neben den Rippen 7 und Rillen 8 ist ein muldenförmiges Reservoir 9 vorgesehen. Die Rippen 7 verlaufen parallel zueinander und etwa parallel zu zwei benachbarten Seitenwandabschnitten 10, 11. Rippen 7 bilden zwischen mittig an dem Seitenwandabschnitt 11 ist ein Handgriff 12 angebracht.

Zwei Seitenwandabschnitte 13 und 14 verbindet die Seitenwandabschnitte 10 und 11 miteinander. Der Seitenwandabschnitt 13 trägt mittig an seinem oberen Rand 4 einen v-förmige Auswölbung 15, die einen Ausgießer bildet.

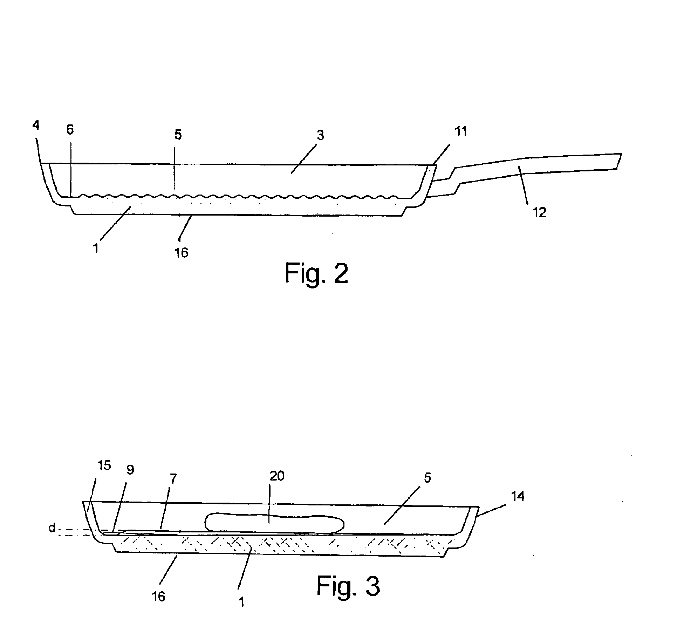

In der Figur 2 ist ein Querschnitt durch die Pfanne aus Fig. 1 entlang der Linie II-II quer zu den Rippen 7 dargestellt. Die Seitenwand 3 erweitert sich von dem Pfannenboden 1 weg etwa konisch. Die der Gargutseite 6 des Pfannenbodens 1 abgewandte bei der Benutzung untere Ofenseite 16 ist plan. Die Ofenseite 16 ist parallel zu dem oberen Rand 4 ausgerichtet.

Die Figur 3 zeigtischließlich einen Querschnitt durch die Pfanne aus Fig. 1 entlang der Linie III-III parallel zu den Rippen 7.

Die Oberseite der Rippen 7 ist parallel zu der Ofenseite 16 ausgebildet. Die Gargutseite 6 ist zwischen den Rippen 7 geneigt, so dass sie mit der Ofenseite 16 einen spitzen Winkel von etwa 1° einschließt. Der Unterschied der Dicke des Pfannenbodens 1 von dem Seitenwandabschnitt 14 zu dem Seitenwandabschnitt 13 ist mit d bezeichnet und beträgt etwa 5 mm bei einer Pfannengröße von 28 cm.

Bei der Benutzung der Pfanne steht diese auf einer Kochstelle eines horizontal ausgerichteten Ofens. Ein Gargut 20 liegt auf den Rippen 7 auf. Diese sind ebenso wie die Ofenseite 16 parallel zu der Kochstelle ausgerichtet und im Betrieb horizontal. Die Gargutseite trägt auch die Rillen 8, die in Benutzung in dem beschriebenen spitzen Winkel gegen die Horizontale geneigt sind. Aufgrund dieser Neigung kann aus dem Gargut 20 austretendes Fett und austretender Saft in den Rillen 8 zu dem Reservoir 9 laufen. Das Gargut 20 wird deshalb bei der Zubereitung nicht mit diesen Flüssigkeiten und mit sich entwikkelndem Dampf beaufschlagt. Das Gargut 20 wird dadurch in Geschmack und Konsistenz vorteilhaft zubereitet. Außerdem kann die in dem Reservoir 9 befindliche Flüssigkeit schnell und effektiv abgegossen werden. Die Ableitung der Flüssigkeit aus dem Bereich des Gargutes 20 erfolgt schneller und effektiver als bei den bekannten Küchenpfannen.

## Patentansprüche

1. Küchenpfanne, insbesondere Grillpfanne, mit einem Pfannenboden (1), der eine Ofenseite (16) und eine Gargutseite (6) aufweist, mit einer umlaufenden, an einem äußeren Rand des Pfannenbodens (1) angeordneten Seitenwand (3) mit einem oberen Rand (4), mit wenigstens einem Handgriff (12) sowie mit der Gargutseite (6) zugeordneten Rippen (7) und zwischen den Rippen (7) ausgebildeten Rillen (8), **dadurch gekennzeichnet , dass** die Gargutseite (6) mit der Ofenseite (16) einen spitzen Winkel einschließt.

2. Küchenpfanne nach Anspruch 1, **dadurch gekennzeichnet, dass** die Gargutseite (6) eine Neigung von 0,5° bis 5° gegenüber der Ofenseite (16) aufweist.

3. Küchenpfanne nach einem der vorhergehenden Ansprüche, **dadurch gekennzeichnet , dass** die Neigung parallel zu den Rippen (7) vorgesehen ist.

4. Küchenpfanne nach einem der vorhergehenden Ansprüche, **dadurch gekennzeichnet , dass** die Rippen (7) an ihrer dem Pfannenboden (1) abgewandten Oberseite parallel zu der Ofenseite (16) verlaufen.

5. Küchenpfanne nach einem der vorhergehenden Ansprüche, **dadurch gekennzeichnet , dass** der Pfannenboden (1) die Form eines Rechtecks mit abgerundeten Ecken aufweist und dass die Rippen (7) und die Rillen (8) im wesentlichen parallel zu zwei Seitenwandabschnitten (10, 11) der Seitenwand (3) verlaufen.

6. Küchenpfanne nach einem der vorhergehenden Ansprüche, **dadurch gekennzeichnet , dass** die Rillen (7) an ihrem der Ofenseite (16) nächsten Ende in ein Reservoir (9) münden.

7. Küchenpfanne nach einem der vorhergehenden Ansprüche, **dadurch gekennzeichnet , dass** der Handgriff (12) an einem zu den Rippen (7) parallelen Seitenwandabschnitt (11) der Seitenwand (3) angeordnet ist.
